# EUROPEAN PATENT APPLICATION

(11) **EP 4 325 674 A1**
(43) Date of publication of application: **21.02.2024**
(21) Application number: 23192192.5
(22) Date of filing: 18.08.2023
(51) Int. Cl.: H01R 13/74, H01R 13/52

(54) **PANEL ADAPTER FOR MOUNTING AN ELECTRIC CONNECTOR TO A PANEL AS WELL AS ADAPTER ASSEMBLY AND CONNECTION SET WITH SUCH A PANEL ADAPTER**

(30) Priority: 18.08.2022 IT 202200017394
(71) Applicant: TE Connectivity Italia Distribution S.r.l., 10093 Collegno (TO) (IT)
(72) Inventor: AMERIO, Fulvio, 10093 Collegno (TO) (IT); SPINCICH, Demis, 10093 Collegno (TO) (IT)
(74) Representative: Grünecker Patent- und Rechtsanwälte PartG mbB

(57) **Abstract**

The present invention relates to a panel adapter (1) for mounting an electric connector (2) to a panel (6), the panel adapter (1) comprising a frame element (12) with at least one frame opening (14) configured to at least partially receive the electric connector (2) in an insertion direction (16) and with a bearing surface (20) surrounding the frame opening (14), and at least one guide structure (30) for slidably guiding a slider element (28) movable along the bearing surface (20) in a translation direction (32), wherein the frame opening (14) extends through the frame element (12) in the insertion direction (16), wherein the guide structure (30) is located on the bearing surface (20), and wherein the translation direction (32) extends transversely to the insertion direction (16). The guide structure (30) facilitates the correct positioning and aligning of the slider element (28) and also helps maintaining the right orientation of the slider element (28) during its installation. Thus, the present invention achieves easier installation, while lowering the risk of the slider element (28) slipping away or becoming wedged. Further, the present invention relates to an adapter assembly (8) comprising such a panel adapter (1) as well as a connection set (10) comprising such an adapter assembly (8) and the use of a guide structure (30).

## Description

### Technical Field to which the Invention Relates

The present invention relates to a panel adapter for mounting an electric connector, such as a panel mount connector of an electric vehicle or other type of electrical system, to a panel. Further, the present invention relates to an adapter assembly comprising such a panel adapter as well as a connection set comprising such an adapter assembly.

### Background Art

In the field of electric mobility and in other technological fields related to electrical engineering, electric connectors on cables or wire harnesses are used for establishing releasable, electrically conductive connections between units that are spaced apart or neighbour each other. For example, an electric motor might need to be connected to an inverter or an inverter requires connection to a battery module, etc.

Some of these units are often integrated in a housing or chassis as part of a modular design and/or because they are manufactured by different suppliers. Thus, it is necessary to establish connections through panels, partition walls or housing walls located between the units to be connected. In these cases, electric connectors are mounted at the interface of the units, such as at cutouts of panels.

In order to securely mount the electric connector to the respective panel, a separate securing means which functions similarly to a circlip is loosely provided and must be installed appropriately to the electric connector. In such existing solutions, the securing means, however, has to be positioned, aligned and kept in the correct orientation during the entire installation. This procedure is time consuming and prone to mistakes, since the securing means could slip away or become wedged.

Therefore, it is desirable to have means for mounting electric connectors to panels which are easy to handle while providing a low error rate.

### Technical Object to be Achieved

The object of the present invention is to provide improved means for mounting electric connectors to panels with simple usability, yet high reliability.

### Disclosure of Invention

The object is achieved by a panel adapter for mounting an electric connector to a panel. The panel adapter comprises a frame element with at least one frame opening configured to at least partially receive the electric connector in an insertion direction and with a bearing surface surrounding the frame opening, and at least one guide structure for slidably guiding a slider element that is movable along the bearing surface in a translation direction. The frame opening extends through the frame element in the insertion direction, the guide structure is located on the bearing surface, and the translation direction extends transversely to the insertion direction.

It is to be understood that the above-mentioned slider element may be any kind of securing means suitable for securely mounting the electric connector to the panel adapter, which in turn can be attached to the panel, as will be described further below. By having the translation direction, along which the slider element is guided, extend transversely to the insertion direction, the slider element can be used to prevent the electric connector from being removed against the insertion direction, once the electric connector is received in the frame opening. Concrete embodiments of the slider element will be described in detail further below.

The functionality of the above-proposed panel adapter mainly benefits from the provision of the guide structure. Firstly, the guide structure can serve as an aid for finding the correct location and alignment for a starting position of the slider element. Secondly, the slider element can be slid along the bearing surface under the guidance of the guide structure into its final position. That is, the guide structure not only facilitates the correct positioning and aligning of the slider element, but it also helps maintaining the right orientation of the slider element during its installation. Thus, the guide structure also increases reliability by lowering the risk of the slider element slipping away or becoming wedged.

The above solution may be further improved by adding one or more of the following optional features. Each optional feature is advantageous on its own and may be combined independently with any other optional feature.

According to one possible embodiment of the panel adapter, the frame opening may be configured as a circumferentially closed through opening, which is entirely surrounded by the bearing surface. This results in a frame element with improved structural stability.

Alternatively, the bearing surface may only surround a circumferential section of the frame opening e.g., less than 75% of the circumference of the frame opening. That is, the frame opening may be laterally open, instead of being circumferentially closed. This embodiment saves material and costs.

According to an embodiment requiring minimal installation space, the bearing surface may be formed by a flat side of the frame element, in particular, a flat side extending perpendicularly to the insertion direction. Preferably, the frame element may have two flat sides arranged opposite of each other and be substantially plate shaped. That is, a height of the frame element measured parallel to the insertion direction may be several times smaller than a length and width of the frame element measured perpendicular to the insertion direction, in order to achieve an overlap or at least an exact fit between the frame element and the panel.

According to another embodiment, the bearing surface may also be curved, wavy or have an uneven profile formed by the frame element adjusted to the shape of the panel. This embodiment has a broad applicability, since it can be used in combination with non-flat panels.

As already mentioned above, the panel adapter can be attached to the panel, in particular to a cutout of the panel. For this, the frame element may be welded, soldered, glued or otherwise fixed to the panel. Accordingly, an inner contour of the cutout is smaller than or equal to an outer contour of the frame element.

Alternatively, the panel adapter may comprise means for fastening the frame element to the panel. For example, the frame element may comprise at least one eyelet, preferably multiple eyelets for passing therethrough fastening elements such as screws or bolts. In yet another embodiment, the frame element may be an integral part of the panel. That is, the panel and frame element may be manufactured as a single-piece component e.g., by rolling, forging, drawing, stamping or the like.

The panel may be a general panel, a partition wall, a housing wall or part of a chassis to which the electric connector is to be mounted by means of the panel adapter. The frame opening may be smaller than the cutout of the panel. According to an alternative embodiment, the frame opening may also be congruent with or larger than the cutout. Thus, the panel adapter can be utilized for cutouts of various sizes.

According to an embodiment with easy manufacturing, the guide structure may be monolithically connected to the frame element. That is, the guide structure and frame element may be a single-piece component made e.g., by injection moulding, additive manufacturing, or the like. Alternatively, the guide structure may be provided as a separate part and fasted to the frame element or directly to the panel by means of screwing, bolting, welding, soldering, gluing, or the like. This alternative embodiment provides greater flexibility when choosing the materials of the guide structure and frame element. In particular, different materials may be used for the guide structure and frame element according to the requirements of the application.

According to one possible embodiment, the guide structure may extend transversely, preferably perpendicularly to the insertion direction. In particular, the guide structure may extend parallel to the translation direction in order to guide the slider element in the translation direction. Especially, the guide structure may be located adjacent to the frame opening and at least sectionally extend past the frame opening. That is, a section of the guide structure may extend next to the frame opening with respect to a direction perpendicular to the translation direction.

According to an embodiment with improved stability, the panel adapter may comprise two guide structures that are arranged opposite of each other with respect to the frame opening. Further, the two guide structures provide a certain redundancy for the case that one guide structure should break off. In particular, the two guide structures may be mutually mirror-invented.

To guide the slider element, each guide structure may comprise at least one slide surface, preferably multiple slide surfaces. For example, first slide surfaces may border the bearing surface at an angle, preferably at a 90°-angle. Moreover, the first slide surfaces on the two guide structures may extend mutually parallel. Second slide surfaces may be spaced apart from the bearing surface. Further, the second slide surfaces may face towards the bearing surface. Preferably, the second slide surfaces extend parallel to the bearing surface. The first and second slide surfaces respectively may extend in the translation direction.

The initial object is further achieved by an adapter assembly comprising a panel adapter according to any one of the above-described embodiments and a slider element, wherein the slider element is guided by the guide structure movable in the translation direction between a release position and a securing position, wherein the slider element in the securing position is closer to the frame opening than in the release position.

This adapter assembly is advantageous, since it adopts the above explained features and advantages of the panel adapter. Moreover, due to its movability relative to the frame opening, the slider element can be used to selectively secure and release the electric connector received in the frame opening.

The slider element may be at least partly located between the two guide structures, in particular between the first slide surfaces. Further, the first slide surfaces and the bearing surface may jointly define a guiding groove for the slider element. Thereby, the slider element and the panel adapter may form a linear plain bearing in which the slider element is guided by the panel adapter. In this embodiment, reliable guiding of the slider element is achieved.

Moreover, the second slide surfaces may define, together with the first slide surfaces and the bearing surface, a duct for the slider element. The slider element may at least partly be located between the guide structures and the frame element, in particular between the second slide surfaces and the bearing surface. Thereby, the slider element may be captively held by the panel adapter, which further facilitates the handling of the adapter assembly.

To achieve simplified handling, the adapter assembly may comprise at least one latching element for catching the slider element in the release position. Alternatively or additionally, the latching element may be adapted for catching the slider element in the securing position. According to a further alternative or cumulative embodiment, the latching element may be adapted for catching the slider element in an intermediate position between the release position and the securing position. The advantage of the intermediate position will be described further below.

Optionally, to catch the slider element in the release position, the securing position and/or the intermediate position respectively, the adapter assembly may comprise at least two latching elements spaced apart from each other. This embodiment has an improved functionality due to catching the slider element in multiple different positions.

The latching elements may be located on the panel adapter and/or on the slider element. Accordingly, the latching elements may each be adapted to engage with a complementary latching element on the slider element or on the panel adapter, respectively. The latching elements on the slider element may also be adapted to engage with complementary latching elements on the electric connector.

The latching elements of the panel adapter may be located on the frame element and/or on the guide structures. For improved visibility, the latching elements may be located on the bearing surface. For example, the latching elements may be latching cams protruding on the bearing surface and jointly forming a latching notch for the slider element.

Alternatively or additionally, the latching elements may each be a flexible latching prong formed by the respective guide structure. In particular, each latching prong may form part of the first or second slide surfaces. This results in a space-saving embodiment.

For the purpose of error-proofing, the slider element may cover at least a section of the frame opening in the securing position and may clear said covered section in the release position. In particular, the slider element may block the insertion of the electric connector into the frame opening, as long as the slider element is not in the release position. For this, the slider element may comprise at least one lock section that overlaps with the frame opening in the insertion direction, when the slider element is in the securing position. This prevents inadvertent insertion of any electric connector and thus fulfils a poka-yoke function.

Optionally, the slider element may still partially cover the frame opening in the intermediate position. The intermediate position can be utilized during transportation of the adapter assembly. In the intermediate position, situated between the release position and the securing position, the slider element is closer to the release position than if it would be in the securing position, but it still blocks the insertion of the electric connector into the frame opening. Thus, when the adapter assembly arrives at its point of installation, the above-described poka-yoke function is active and can be deactivated with less effort.

The initial object is also achieved by a connection set comprising an adapter assembly according to any one of the above-described embodiments and an electric connector. The electric connector may in particular be a panel mount connector configured to be at least partially inserted into the frame opening in the insertion direction. The panel mount connector may comprise at least one recess for at least partially receiving the slider element, wherein the recess extends transversely to the insertion direction. Preferably, the recess extends parallel to the translation direction.

The connection set benefits from the above-described functions and advantages of the adapter assembly, in particular of the panel adapter. Due to its movability relative to the frame opening, the slider element in the securing position is closer to the panel mount connector inserted into the frame opening than the slider element in the release position. Moreover, the slider element may be adapted to engage with the panel mount connector in a form-fit acting in the insertion direction. In particular, the slider element may be adapted to engage in said form-fit at the recess, when the slider element is in the securing position. Thus, the panel mount connector can be selectively secured to the panel adapter by means of the slider element.

According to an easy to manufacture embodiment, the recess may be designed as a groove or slot extending transversely, preferably perpendicularly to the insertion direction. More preferably, the slot may run parallel to the guiding groove and/or duct, when the panel mount connector is received in the frame opening. Most preferably, the slot forms an extension of the guiding groove and/or duct, when the panel mount connector is received in the frame opening.

The lock section of the slider element may be formed complementarily to the slot. For improved stability, the slider element may comprise two lock sections arranged opposite of each other with respect to the frame opening. In particular, the slider element may be U-shaped in a cross-section parallel to the bearing surface, wherein the two lock sections are mutually mirror-invented.

Accordingly, the panel mount connector may comprise two slots, one for each lock section. Further, the slider element in the securing position may encompass the panel mount connector inserted into the frame opening, while the two lock sections engage in the form fit with the panel mount connector at the two slots.

According to an alternative embodiment with a simpler design, the slider element may be substantially straight with only one lock section. Further, in this embodiment, the slider element may be configured in the manner of a slide bolt, which is captively held and guided by the guide structure(s).

Optionally, the panel mount connector may comprise a flange spaced apart from the slot(s). In particular, the distance between the flange and the slot(s) may be equal to or greater than the height of the frame element measured in the insertion direction. In other words, the frame element fits in the space between the flange and the slot(s). The flange can act as a stop which limits the insertion depth of the panel mount connector into the frame opening.

Optionally, the panel mount connector may further comprise a seal ring located between the flange and the slot(s). The seal ring may be seated on the flange and be spaced apart from the slot(s). In particular, the distance between the seal ring and the slot(s) may be equal to or smaller than the height of the frame element measured in the insertion direction. That is, the frame element only fits in the space between the seal ring and the slot(s), if the seal ring abuts the frame element and, if necessary, is compressed between the flange and the frame element.

In order to prevent interference with the slider element and the guide structure(s), the flange and/or the seal ring may abut against the frame element on a side opposite of the guide structure(s). This also allows the frame element to be sandwiched between the flange and the slider element in order to achieve a form fit. If the slider element is held captively by the guide structure(s), the flange can be omitted on the panel mount connector.

According to an embodiment with increased applicability, the frame element may comprise multiple frame openings, each for receiving one panel mount connector. Further, the panel adapter may comprise one, preferably two guide structures for each frame opening. Accordingly, the adapter assembly may comprise multiple slider elements, preferably one slider element for each frame opening. Alternatively, several frame openings may be allocated to a single slider element. Further, the connection set may comprise up to multiple panel mount connectors, preferably one panel mount connector for each frame opening.

According to another possible embodiment, the frame element may be formed by a housing of a header connector. In other words, the panel adapter may be an integral part of the header connector. This allows the manufacturers of the panel adapter to integrate their own proprietary connectors, while also creating the possibility to include connectors from third party suppliers.

The initial object is also achieved by the use of a guide structure on a panel for slidably holding a slider element configured for locking an electric connector mounted to the panel. In particular, the slider element may be configured according to any one of the above-described embodiments. The guide structure may be provided as part of a panel adapter according to the above-described embodiments. Alternatively, the guide structure may be provided as part of the panel itself.

This advantageously allows the provision of guidance for virtually any slider element that is used for locking any kind of electric connector mounted to any kind of panel. Therefore, the use according to the present invention exhibits a broad applicability.

In the following, exemplary embodiments of the invention are described with reference to the drawings. The embodiments shown and described are for explanatory purposes only. The combination of features shown in the embodiments may be changed according to the foregoing description. For example, a feature that is not shown in an embodiment but described above may be added if the technical effect associated with this feature is beneficial for a particular application. *Vice versa,* a feature shown as part of an embodiment may be omitted as described above, if the technical effect associated with this feature is not needed in a particular application.

In the drawings, elements that correspond to each other with respect to function and/or structure have been provided with the same reference numeral.

In the drawings:
- Fig. 1: shows a schematic representation of a perspective view of a panel adapter according to one possible embodiment of the present disclosure;
- Fig. 2: shows a schematic representation of a side view of an adapter assembly according to one possible embodiment of the present disclosure;
- Fig. 3: shows a schematic representation of an exploded view of a connection set according to one possible embodiment of the present disclosure;
- Fig. 4: shows a schematic representation of a perspective view of the connection set according to the embodiment shown in Fig. 3;
- Fig. 5: shows another schematic representation of a perspective view of the connection set according to the embodiment shown in Fig. 3;
- Fig. 6: shows a schematic representation of a top view of an adapter assembly according to another possible embodiment of the present disclosure; and
- Fig. 7: shows a schematic representation of a perspective view of a panel adapter according to another possible embodiment of the present disclosure.

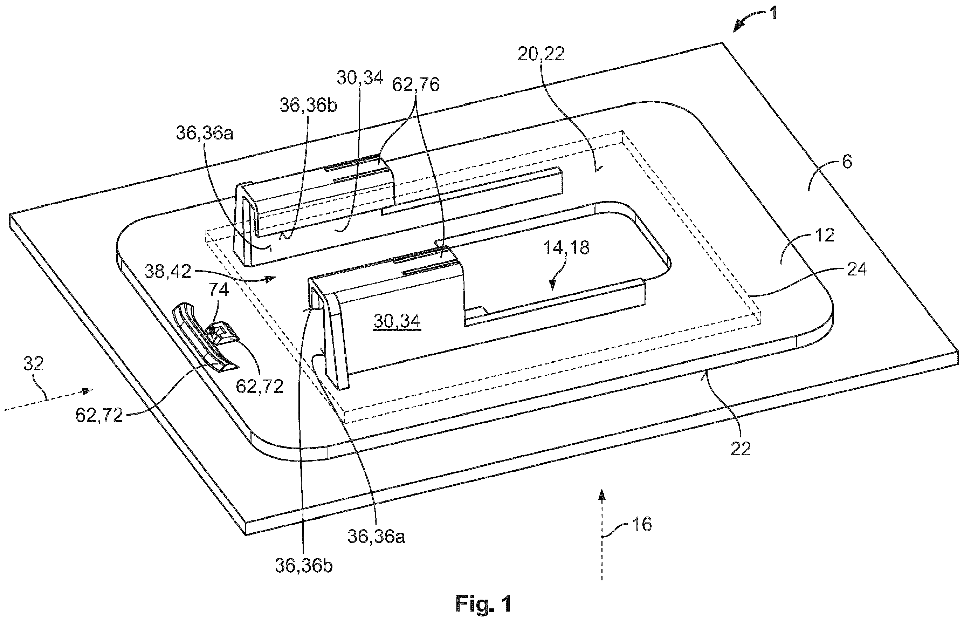

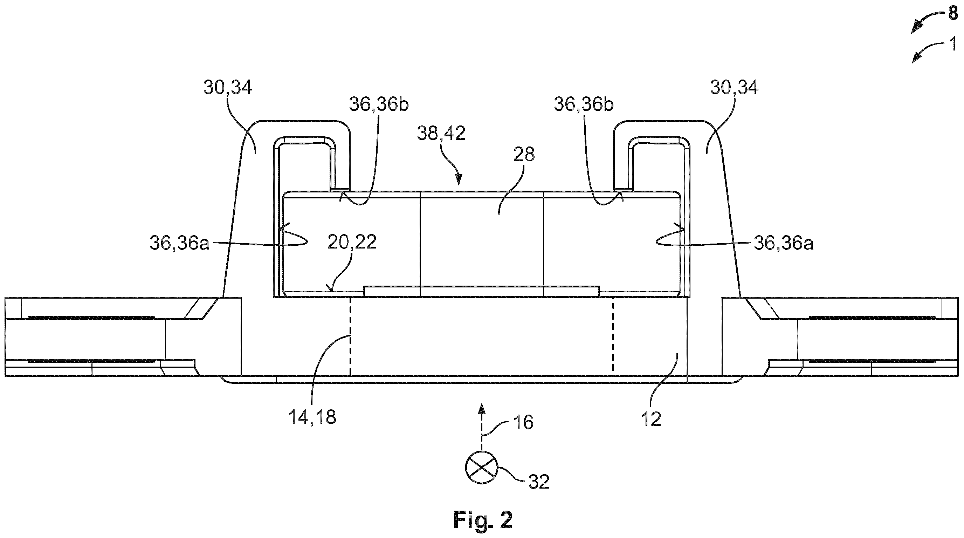

In the following, the structure of possible embodiments of a panel adapter 1 for mounting an electric connector 2, such as a panel mount connector 4 of an electric vehicle (not shown), to a panel 6 is explained with reference to the exemplary embodiments shown in Figs. 1 to 7. Further, Figs. 2 to 6 are used for explaining the structure of an adapter assembly 8 and a connection set 10 according to the present invention.

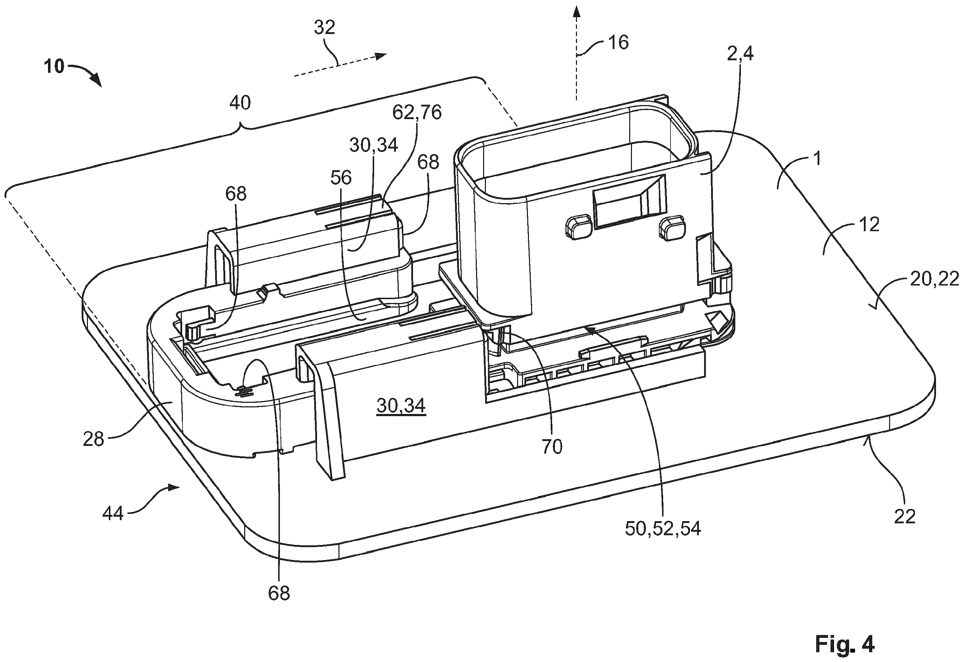

Fig. 1 shows one possible embodiment of the panel adapter 1 in a perspective view. The panel adapter 1 comprises a frame element 12 with at least one frame opening 14 configured to at least partially receive the electric connector 2 in an insertion direction 16 (see Fig. 4). In the shown embodiment, the frame element 12 has one frame opening 14 configured as a circumferentially closed through opening 18 with an inner contour complementary to the outer contour of the electric connector 2. In particular, the frame opening 14 extends through the frame element 12 in the insertion direction 16.

A bearing surface 20 of the frame element 12 entirely surrounds the frame opening 14. The bearing surface 20 may be formed by a flat side 22 of the frame element 12 and extend perpendicularly to the insertion direction 16. According to another embodiment not shown in the figures, the bearing surface 20 may also be curved, wavy or have an uneven profile formed by the frame element 12 adjusted to the shape of a non-flat panel (not shown). Further, the bearing surface 20 may only surround a circumferential section of the frame opening 14 e.g., less than 75% of the circumference of the frame opening 14. That is, the frame opening 14 may be laterally open, instead of being circumferentially closed.

As can be seen in Fig. 1, the frame element 12 may be substantially plate shaped with two flat sides 22 arranged opposite of each other. That is, a height of the frame element 12 measured parallel to the insertion direction 16 may be several times smaller than a length and width of the frame element 12 measured perpendicular to the insertion direction 16.

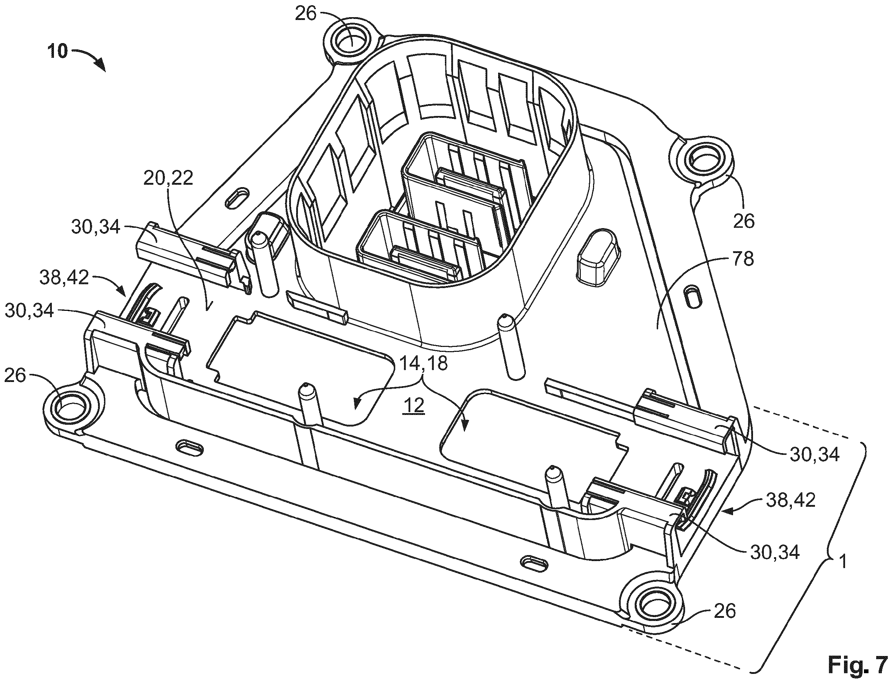

In Fig. 1, the panel adapter 1 is depicted attached to the panel 6, in particular, attached on top of a cutout 24 of the panel 6. For this, the frame element 12 may be welded, soldered, glued or otherwise fixed to the panel 6. According to another possible embodiment shown in Fig. 7, the panel adapter 1 may comprise means for fastening the frame element 12 to the panel 6. For example, the frame element 12 may comprise at least one eyelet 26, preferably multiple eyelets 26 for passing therethrough fastening elements (not shown) such as screws or bolts. In yet another embodiment not shown in the figures, the frame element 12 may be an integral part of the panel 6. That is, the panel 6 and frame element 12 may be manufactured as a single-piece component e.g., by rolling, forging, drawing, stamping or the like.

The panel 6 may be a general panel, a partition wall, a housing wall or part of a chassis to which the electric connector 2 is to be mounted by means of the panel adapter 1 and a slider element 28 (see Figs. 2 to 6). In Fig. 1, the cutout 24 of the panel 6 is larger than the frame opening 14. According to an alternative embodiment not shown in the figures, the cutout 24 may also be congruent with or smaller than the frame opening 14. Preferably, an inner contour of the cutout 24 is smaller than or equal to an outer contour of the frame element 12.

At least one guide structure 30 for slidably guiding the slider element is located on the bearing surface 20 of the frame element 12. The guide structure 30 may be monolithically connected with the frame element 12. That is, the guide structure 30 and frame element 12 may be a single-piece component made e.g., by injection moulding, additive manufacturing, or the like. Alternatively, the guide structure 30 may be provided as a separate part and fastened to the frame element 12 or directly to the panel 6 by means of screwing, bolting, welding, soldering, gluing, or the like.

The guide structure 30 serves as a guide for the slider element 28, which is movable along the bearing surface 20 in a translation direction 32. In particular, the guide structure 30 extends transversely, preferably perpendicularly to the insertion direction 16 and parallel to the translation direction 32. Specifically, the guide structure 30 may be located adjacent to the frame opening 14 and at least sectionally extend past the frame opening 14.

In the exemplary embodiment shown in Fig. 1, the guide structure 30 is designed as a rail 34 extending on the bearing surface 20 in the translation direction 32. Further, in the exemplary embodiment shown in Fig. 1, the panel adapter 1 comprises two guide structures 30 that are arranged opposite each other with respect to the frame opening 14. In particular, the two guide structures 30 are mutually mirror-inverted.

To guide the slider element 28, each guide structure 30 may comprise at least one slide surface 36, preferably multiple slide surfaces 36a, 36b. First slide surfaces 36a may border the bearing surface 20 at an angle, preferably a 90°-angle. Moreover, the first slide surfaces 36a may extend on the two guide structures 30 in a mutually parallel manner. The slider element 28 may be at least partly located between the two guide structures 30, in particular between the first slide surfaces 36a. Further, the first slide surfaces 36a and the bearing surface 20 may jointly define a guiding groove 38 for the slider element 28 (see Fig. 2). Thereby, the slider element 28 and the panel adapter 1 may form a linear plain bearing 40, in which the slider element 28 is guided by the panel adapter 1.

On the other hand, second slide surfaces 36b may be spaced apart from the bearing surface 20. Further, the second slide surfaces 36b may face towards the bearing surface 20. Preferably, the second slide surfaces 36b extend parallel to the bearing surface 20 and define together with the first slide surfaces 36a and the bearing surface 20 a duct 42 for the slider element 28 (see Fig. 2). The slider element 28 may at least partly be located between the guide structures 30 and the frame element 12, in particular between the second slide surfaces 36b and the bearing surface 20. Thereby, the slider element 28 may be captively held by the panel adapter 1.

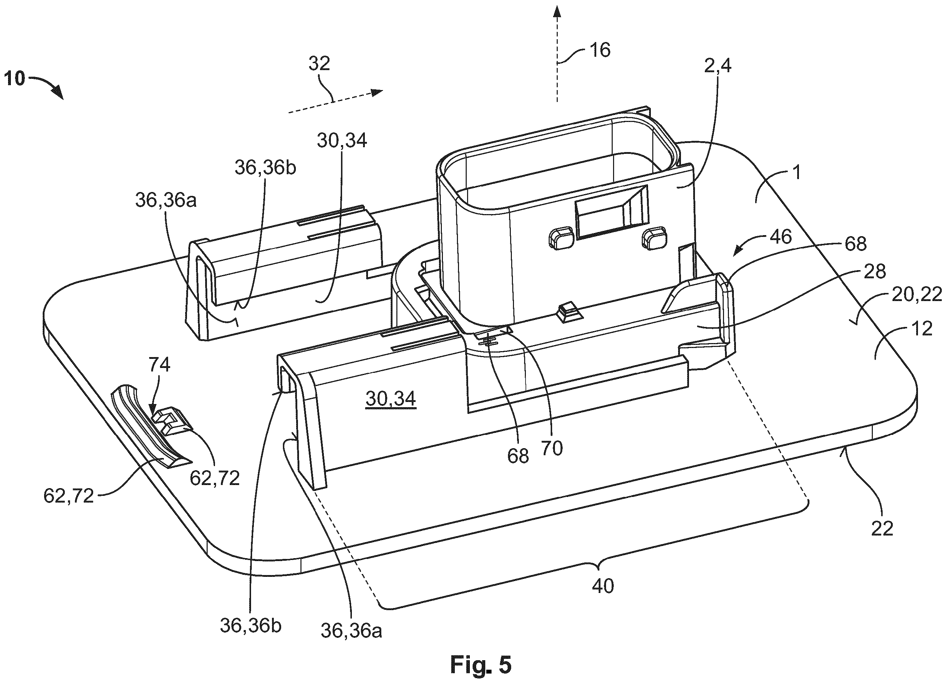

In Figs. 2 to 5, possible embodiments of the adapter assembly 8 are shown. The adapter assembly 8 comprises the panel adapter 1 according to any one of the above-described embodiments and the slider element 28. As already explained, the slider element 28 is guided by the guide structure 30 movable between a release position 44 (see Fig. 4) and a securing position 46 (see Fig. 5). Compared to the slider element 28 in the release position 44, the slider element 28 in the securing position 46 is closer to the frame opening 14.

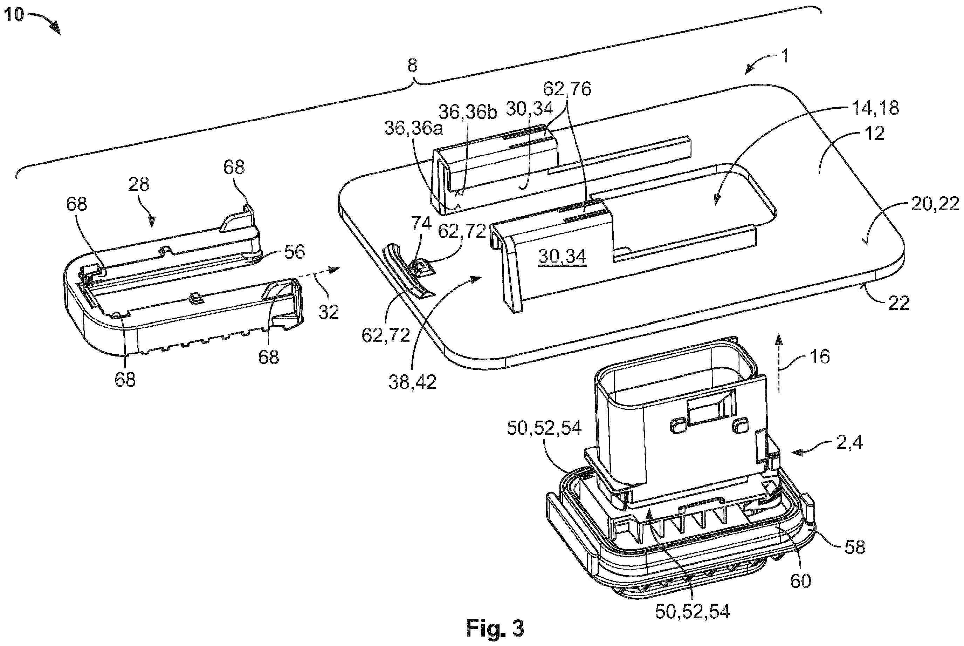

Fig. 3 further shows an exploded perspective view of the connection set 10 according to one possible embodiment of the present disclosure. The connection set 10 comprises the adapter assembly 8 and the electric connector 2. The electric connector 2 may be a panel mount connector 4 adapted to be at least partially inserted into the frame opening 14 (see Fig. 4). Thus, the slider element 28 in the securing position 46 is closer to the panel mount connector 4 inserted into the frame opening 14 than the slider element 28 in the release position 44.

The panel mount connector 4 may comprise at least one recess 50 for at least partially receiving the slider element 28. In particular, the recess 50 may be adapted to engage with the slider element 28, when the slider element 28 is in the securing position 46. The recess 50 may be designed as a groove 52 or slot 54 extending transversely, preferably perpendicularly to the insertion direction 16. More preferably, the slot 54 runs parallel to the guiding groove 38 and duct 42, when the panel mount connector 4 is received in the frame opening 14. Most preferably, the slot 54 forms an extension of the guiding groove 38 and duct 42, when the panel mount connector 4 is received in the frame opening 14.

As can be seen in Figs. 3 and 4, the slider element 28 may comprise at least one lock section 56, preferably formed complementarily to the slot 54. The lock section 56 may overlap with the frame opening 14, when the slider element 28 is in the securing position 46. In particular, the lock section 56 and frame opening 14 may overlap with each other in the insertion direction 16, when the slider element 28 is in the securing position 46.

The panel mount connector 4 may comprise a flange 58 spaced apart from the slot 54. In particular, the distance between the flange 58 and the slot 54 may be equal to or greater than the height of the frame element 12 measured in the insertion direction 16. In other words, the frame element 12 fits in the space between the flange 58 and the slot 54.

Optionally, the panel mount connector 4 may comprise a seal ring 60 located between the flange 58 and the slot 54. The seal ring 60 may be seated on the flange 58 and be spaced apart from the slot 54. In particular, the distance between the seal ring 60 and the slot 54 may be equal to or smaller than the height of the frame element 12 measured in the insertion direction 16. That is, the frame element 12 only fits in the space between the seal ring 60 and the slot 54, if the seal ring 60 abuts the frame element 12 and, if necessary, is compressed between the flange 58 and the frame element 12.

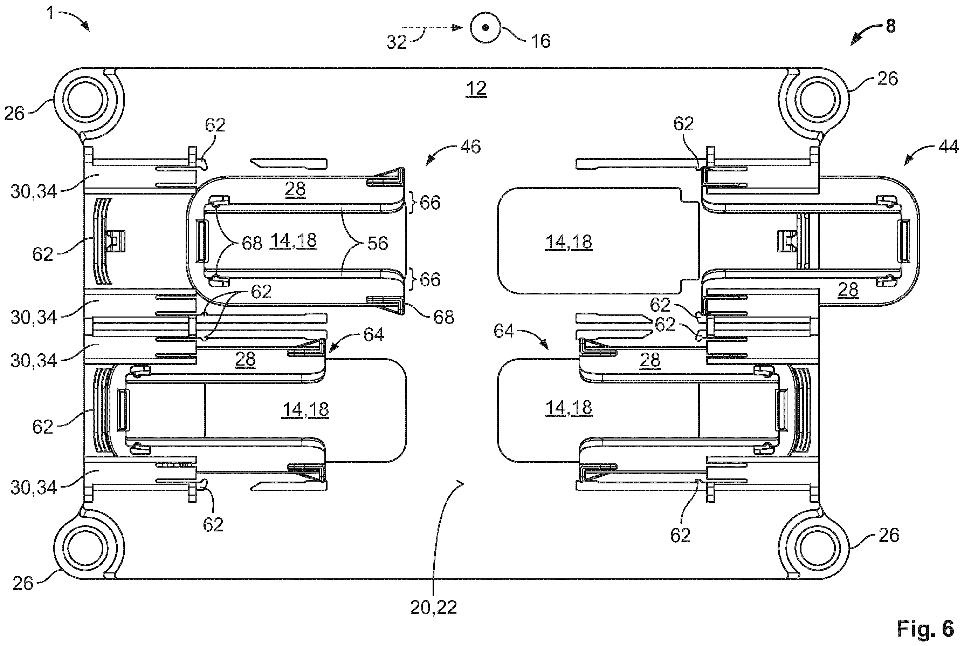

In the shown embodiments, the slider element 28 comprises two lock sections 56 arranged opposite of each other with respect to the frame opening 14 (see Fig. 6). Accordingly, the panel mount connector 4 comprises two slots 54, one for each lock section 56. As can be seen in Fig. 5, the slider element 28 in the securing position 46 encompasses the panel mount connector 4 inserted into the frame opening 14, while the two lock sections 56 engage in a form fit with the panel mount connector 4 at the two slots 54. For this, the slider element 28 is U-shaped in a cross-section parallel to the bearing surface 20. However, the slider element 28 may also be substantially straight and configured in the manner of a slide bolt, which is captively held and guided by the guide structure(s) 30.

The adapter assembly 8 may comprise at least one latching element 62 for catching the slider element 28 in the release position 44. Alternatively, the latching element 62 may be adapted for catching the slider element 28 in the securing position 46. Further alternatively, the latching element 62 may be adapted for catching the slider element 28 in an intermediate position 64 between the release position 44 and the securing position 46 (see Fig. 6).

As can be seen in the upper left side of Fig. 6, the slider element 28 in the securing position covers at least a section 66 of the frame opening 14. In the intermediate position 64, the slider element 28 still covers the frame opening 14 partially (see lower left and right side of Fig. 6). When in the release position 44, the slider element 28 clears the frame opening, in particular the previously covered section 66 (see upper right side of Fig. 6)

The latching element 62 may be located on the panel adapter 1 or on the slider element 28. Accordingly, the latching element 62 may be adapted to engage with a complementary latching element 68 on the slider element 28 or on the panel adapter 1, respectively. The latching element 68 on the slider element 28 may be additionally or alternatively adapted to engage with a complementary latching element 70 on the panel mount connector 4 (see Fig. 5).

The latching element 62 of the panel adapter 1 may be located on the frame element 12 or on the guide structures 30. In particular, the latching element 62 may be a latching cam 72 protruding on the bearing surface 20, wherein the slider element 28 comprises a latching notch (not shown). Optionally, two latching cams 72 may be provided and jointly form a latching notch 74 for the slider element 28. In this case, the slider element 28 itself does not require any latching notch.

Alternatively or additionally, the latching element 62 may be a flexible latching prong 76 formed by the respective guide structure 30. Optionally, each latching prong 76 may form part of the first slide surfaces 36a or the second slide surfaces 36b. Further, each latching prong 76 may comprise a hook (not shown) at a free end for engaging the slider element 28.

Optionally, the adapter assembly 8 may comprise two or more latching elements 62 spaced apart from each other for catching the slider element in the release position 44, the securing position 46 and/or the intermediate position 64, respectively.

Further optionally, the frame element 12 may comprise multiple frame openings 14, each for receiving one electric connector 2 (see Figs. 6 and 7). Accordingly, the adapter assembly 8 may comprise multiple slider elements 28, preferably one slider element 28 for each frame opening 14 as is shown in Fig. 6. Moreover, the connection set 10 may comprise up to multiple panel mount connectors 4, preferably one panel mount connector 4 for each frame opening 14.

As can be seen in Fig. 7, the frame element 12 may be formed by a housing 78 of a header connector 80. In other words, the panel adapter 1 may be an integral part of the header connector 80.

### REFERENCE SIGNS

- 1: panel adapter
- 2: electric connector
- 4: panel mount connector
- 6: panel
- 8: adapter assembly
- 10: connection set
- 12: frame element
- 14: frame opening
- 16: insertion direction
- 18: through opening
- 20: bearing surface
- 22: flat side
- 24: cutout
- 26: eyelet
- 28: slider element
- 30: guide structure
- 32: translation direction
- 34: rail
- 36, 36a, 36b: slide surface
- 38: guiding groove
- 40: linear plain bearing
- 42: duct
- 44: release position
- 46: securing position
- 50: recess
- 52: groove
- 54: slot
- 56: lock section
- 58: flange
- 60: seal ring
- 62: latching element
- 64: intermediate position
- 66: section
- 68: complementary latching element
- 70: complementary latching element
- 72: latching cam
- 74: latching notch
- 76: latching prong
- 78: housing
- 80: header connector

## Claims

1. Panel adapter (1) for mounting an electric connector (2) to a panel (6), the panel adapter (1) comprising:
- a frame element (12) with at least one frame opening (14) configured to at least partially receive the electric connector (2) in an insertion direction (16) and with a bearing surface (20) surrounding the frame opening (14), and
- at least one guide structure (30) for slidably guiding a slider element (28) movable along the bearing surface (20) in a translation direction (32),
wherein the frame opening (14) extends through the frame element (12) in the insertion direction (16),
wherein the guide structure (30) is located on the bearing surface (20), and
wherein the translation direction (32) extends transversely to the insertion direction (16).

2. Panel adapter (1) according to claim 1, wherein the guide structure (30) comprises at least one slide surface (36, 36a, 36b) spaced apart from and/or facing towards the bearing surface (20).

3. Panel adapter (1) according to claim 1 or 2, wherein the guide structure (30) is monolithically connected with the frame element (12).

4. Adapter assembly (8) comprising a panel adapter (1) according to any one of claims 1 to 3 and a slider element (28), wherein the slider element (28) is guided by the guide structure (30) movable in the translation direction (32) between a release position (44) and a securing position (46), wherein the slider element (28) in the securing position (46) is closer to the frame opening (14) than in the release position (44).

5. Adapter assembly (8) according to claim 4, wherein the slider element (28) and the panel adapter (1) form a linear plain bearing (40).

6. Adapter assembly (8) according to claim 4 or 5, wherein the slider element (28) is at least partly located between the guide structure (30) and the bearing surface (20).

7. Adapter assembly (8) according to any one of claims 4 to 6, wherein the adapter assembly (8) comprises at least one latching element (62, 68) for catching the slider element (28) in the release position (44), in the securing position (46) and/or in an intermediate position (64) between the release position (44) and the securing position (46).

8. Adapter assembly (8) according to claim 7, wherein the adapter assembly (8) comprises at least two latching elements (62, 68) spaced apart from each other.

9. Adapter assembly (8) according to claim 8, wherein the latching elements (62) are located on the guide structure (30) and/or on the bearing surface (20).

10. Adapter assembly (8) according to any one of claims 4 to 9, wherein the slider element (28) covers at least a section (66) of the frame opening (14) in the securing position (46) and clears the covered section (66) in the release position (44).

11. Adapter assembly (8) according to any one of claims 4 to 10, wherein the slider element (28) comprises at least one lock section (56) that overlaps with the frame opening (14) in the insertion direction (16), when the slider element (28) is in the securing position (46).

12. Adapter assembly (8) according to claim 11, wherein the slider element (28) comprises two lock sections (56) and/or the panel adapter (1) comprises two guide structures (30) that are arranged opposite of each other with respect to the frame opening (14).

13. Adapter assembly (8) according to any one of claims 4 to 12, wherein the slider element (28) is U-shaped in a cross-section parallel to the bearing surface (20).

14. Connection set (10) comprising an adapter assembly (8) according to any one of claims 4 to 13 and an electric connector (2) configured to be at least partially inserted into the frame opening (14) in the insertion direction (16), wherein the electric connector (2) comprises at least one recess (50) for at least partially receiving the slider element (28), and wherein the recess (50) extends transversely to the insertion direction (16).

15. Use of a guide structure (30) on a panel (6) for slidably holding a slider element (28) configured for locking an electric connector (2) mounted to the panel (6).
